# EUROPÄISCHE PATENTSCHRIFT

(11) **EP 3 064 403 B1**
(45) Veröffentlichungstag und Bekanntmachung des Hinweises auf die Patenterteilung: **03.01.2018**
(21) Anmeldenummer: 16158037.8
(22) Anmeldetag: 01.03.2016
(51) Int. Cl.: B60R 19/38, B60R 19/56

(54) **UNTERFAHRSCHUTZEINRICHTUNG MIT EINSTELLBAREM ANSCHLAG**
UNDERRIDE BARRIER WITH AN ADJUSTABLE STOP
DISPOSITIF DE PROTECTION ARRIERE AVEC BUTEE REGLABLE

(30) Priorität: 02.03.2015 DE 102015203659
(43) Veröffentlichungstag der Anmeldung: 07.09.2016
(73) Patentinhaber: Franz Xaver Meiller Fahrzeug- und Maschinenfabrik-GmbH & Co KG, 80997 München (DE)
(72) Erfinder: SANKTJOHANSER, Paul, 82380 Peißenberg (DE)
(74) Vertreter: Weickmann & Weickmann PartmbB

(56) Entgegenhaltungen:
- EP-A2- 1 132 259
- DE-A1-102004 024 159

## Beschreibung

Die Erfindung betrifft eine klappbare Unterfahrschutzeinrichtung für ein Lastentransportfahrzeug mit einem Fahrzeugrahmen, umfassend eine längliche, normalerweise horizontal angeordnete Unterfahrschutzbarriere zur Sicherung eines heckseitigen Bereichs des Lastentrasportfahrzeugs gegen das Auffahren bzw. Unterfahren durch ein anderes Fahrzeug und eine Halterungsanordnung mit wenigstens einer Halterungseinrichtung zur Befestigung der Unterfahrschutzbarriere am heckseitigen Ende des Fahrzeugrahmens des Lastentransportfahrzeugs, wobei die Unterfahrschutzbarriere zwischen einer den zu sichernden Bereich sperrenden Sicherungsstellung und einer diesen Bereich freigegeben Freigabestellung um eine normalerweise horizontale Schwenkachse relativ zum Fahrzeugrahmen verschwenkbar ist, und wobei die Halterungsanordnung ferner eine Arretiereinrichtung aufweist, mittels welcher die Unterfahrschutzbarriere in wenigstens einer bestimmten Schwenkstellung arretierbar ist, wobei die Halterungseinrichtung ein an dem Fahrzeugrahmen zu befestigendes Basishalteelement und einen an dem Basishalteelement mittels einer von dem Basishalteelement getragenen Schwenklageranordnung angeordneten, um die Schwenkachse schwenkbaren Schwenkhebel aufweist, an dem die Unterfahrschutzbarriere angeordnet ist, wobei die Arretiereinrichtung als Verriegelungsmittel eine Sperrriegelvorrichtung mit einem quer zur Schwenkebene des Schwenkhebels relativ zu diesem bewegbaren Sperrriegel und eine Verriegelungsausnehmung zur Aufnahme des Sperrriegels in einer der bestimmten Schwenkstellung der Unterfahrschutzbarriere entsprechenden Schwenkstellung des Schwenkhebels aufweist, um den Schwenkhebel zu arretieren und die Unterfahrschutzbarriere in der bestimmten Schwenkstellung zu halten, wobei von den Verriegelungsmitteln Sperrriegel und Verriegelungsausnehmung eines an dem Schwenkhebel - und das andere an einem Adapterelement vorgesehen ist. Bei Lastentransportfahrzeugen, also beispielsweise Lastkraftwagen, Anhängern usw., steht der heckseitige Rahmenbereich üblicherweise über den Hinterachsbereich hinaus nach hinten ab, wobei der Rahmen relativ hoch über dem Boden bzw. der Fahrbahn liegt. Es sind in der Vergangenheit Auffahrunfälle vorgekommen, bei denen ein PKW auf ein Lastentransportfahrzeug aufgefahren und dabei mit seiner Front unter den Rahmen des Lastentransportfahrzeugs geraten ist. Bei diesen Unfällen waren die PKW-Insassen in höchstem Maße gefährdet, da bei dem Unfallgeschehen die "Knautschzone" des PKW nicht wirksam werden konnte, weil der Fahrgastraum des PKW bereits sehr nahe an dem nach hinten abstehenden Rahmen des Lastentransportfahrzeugs herangekommen war, bevor der PKW durch den Aufprall abgebremst werden konnte. Um derartige Unfallsituationen zu vermeiden, wurden Unterfahrschutzeinrichtungen der eingangs genannten Art vorgeschlagen. Ein bekanntes Beispiel einer solchen Unterfahrschutzeinrichtung nach dem Oberbegriff von Anspruch 1, ist in der EP 1 132 259 A2 beschrieben.

Die Unterfahrschutzbarriere liegt in ihrer Sicherungsstellung üblicherweise unterhalb und heckseitig des nach hinten überstehenden Rahmenbereichs des Lastentransportfahrzeugs, so dass ein von hinten auf das Lastentransportfahrzeug auffahrender PKW mit seiner Fahrzeugfront auf die in der Sicherungsstellung befindliche Unterfahrschutzbarriere treffen würde. Der Fahrgastraum des PKW wäre im Auftreffzeitpunkt noch so weit vom Rahmen des Lastentransportfahrzeugs entfernt, dass die "Knautschzone" des PKW wirksam werden könnte, also Aufprallenergie in Deformationsenergie im Knautschzonenbereich umgesetzt und absorbiert werden könnte. Die Insassen des PKW hätten somit eine größere Chance, dass der Unfall für sie glimpflich ausgeht.

Es gibt Lastentransportfahrzeuge, bei denen der Heckbereich unterhalb des Rahmens in bestimmten Betriebssituationen von hinten her zugänglich sein muss und nicht durch eine Unterfahrschutzbarriere versperrt sein darf. Eine solche Betriebssituation liegt beispielsweise vor, wenn das Lastentransportfahrzeug mit einem Straßenfertiger kombiniert betrieben werden soll, um den Straßenfertiger mit Staßenbelagsmaterial zu versorgen. In bekannter Weise ist es dabei erforderlich, dass der Straßenfertiger mit seinem Frontbereich unter dem heckseitigen Rahmenbereich des vorausfahrenden Lastentransportfahrzeugs liegen kann, um den kombinierten Betrieb zu ermöglichen. Für derartige Betriebssituationen kann die Unterfahrschutzbarriere bei den Unterfahrschutzeinrichtungen der hier betrachteten Art aus ihrer Sicherungsstellung heraus in die Freigabestellung verschwenkt werden, so dass der Heckbereich des Lastentransportfahrzeugs unterhalb des Rahmens freigegeben ist.

Hersteller von Unterfahrschutzeinrichtungen sind daran interessiert, einen jeweiligen Bautyp einer Unterfahrschutzeinrichtung für unterschiedliche Typen und Fabrikate von Lastentransportfahrzeugen anbieten zu können. Da die verschiedenen Lastentransportfahrzeugtypen jedoch voneinander abweichende Heckausgestaltungen und unterschiedliche Rahmengeometrien aufweisen, ist es schwierig, einen einheitlichen Bautyp einer Unterfahrschutzeinrichtung bereitzustellen, der für die verschiedenen Lastentransportfahrzeugfabrikate gleichermaßen gut geeignet ist.

Ein häufig auftretendes Problem ist, dass die Lastentransportfahrzeuge im Heckbereich wenig Freiraum für die Aufnahme der Unterfahrschutzbarriere in der Freigabestellung bieten, wobei noch hinzukommt, dass aufgrund von Dimensionstoleranzen der für die Aufnahme der Unterfahrschutzbarriere in der Freigabestellung nutzbare Platz selbst bei ein und dem selben Fahrzeugtyp unterschiedlich ausfallen kann. Diesbezüglich kritisch sind insbesondere auch Hinterkipperfahrzeuge, bei denen die Kippbrücke bei einem Kippvorgang mit ihrem heckseitigen Ende in einen heckseitigen Raumbereich eintaucht, wobei dieser Raumbereich dafür freigehalten werden muss und somit für die Positionierung der Unterfahrschutzbarriere in der Freigabestellung nicht nutzbar ist. Grundsätzlich laufen die Bestrebungen darauf hinaus, die Unterfahrschutzbarriere so weit wie möglich nach oben und somit nahe ans Fahrzeug in die Freigabestellung klappen zu können.

Eine Möglichkeit der Bereitstellung eines einheitlichen Bautyps einer Unterfahrschutzeinrichtung für unterschiedliche Typen und Fabrikate von Lastentransportfahrzeugen besteht darin, die Unterfahrschutzeinrichtung in ihrem Platzbedarf an dem Lastentransportfahrzeug mit dem kleinsten verfügbaren Freiraum im Heckbereich zu orientieren, was jedoch bedeuten würde, dass bei Lastentransportfahrzeugen, die mehr Platz für die Unterbringung der Unterfahrschutzbarriere in der Freigabestellung bieten würden, dieser nicht optimal ausgenützt würde.

Die aus der EP 1 132 259 A2 bekannte Unterfahrschutzeinrichtung bietet die Möglichkeit, die Unterfahrschutzbarriere wahlweise in einer von drei verschiedenen Hochklappstellungen (Freigabestellungen) zu arretieren. Hierzu weist der Schwenkhebel eine Lochraster-Adapterplatte mit drei nebeneinander liegenden Rastlöchern auf. Jedes dieser Rastlöcher kann beim Hochklappen des Schwenkhebels in Flucht mit dem Sperrriegel einer an dem Basishalteelement befestigten Sperrriegelvorrichtung gebracht werden, um den Sperrriegel verriegelnd in Eingriff zu nehmen und somit die Unterfahrschutzbarriere in der betreffenden Schwenkstellung zu fixieren. Diese bekannte Lösung zielt darauf ab, drei nahe beieinanderliegende unterschiedliche Freigabestellungen der Unterfahrschutzbarriere bereitzustellen, die stets wahlweise nutzbar sind.

Der vorliegenden Erfindung liegt die Aufgabe zugrunde, eine Unterfahrschutzeinrichtung der eingangs genannten Art bereitzustellen, die für unterschiedliche Lastentransportfahrzeuge geeignet ist und eine gute Raumausnutzung für die Unterbringung der Unterfahrschutzbarriere in deren Freigabestellung unabhängig vom jeweiligen Lastentransportfahrzeug ermöglicht und dennoch einen sehr einfachen und preisgünstig zu realisierenden Aufbau aufweist.

Zur Lösung dieser Aufgabe wird eine Unterfahrschutzeinrichtung mit den Merkmalen des Anspruchs 1 vorgeschlagen, nämlich eine Unterfahrschutzeinrichtung der eingangs genannten Art, die ferner dadurch gekennzeichnet ist, dass das Adapterelement in verschiedenen Einstellpositionen fixierbar an dem Basishalteelement angeordnet ist, wobei das an dem Basishalteelement vorgesehene Verriegelungsmittel in jeder der Einstellpositionen des Adapterelementes so positioniert ist, dass es in einer der jeweiligen Einstellpositionen entsprechenden Schwenkstellung des Schwenkhebels mit dem anderen Verriegelungsmittel verriegelnd in Eingriff bringbar ist, um den Schwenkhebel zu arretieren.

Die erfindungsgemäße Lösung ermöglicht somit die Verstellung eines der beiden Verriegelungsmittel Sperrriegel und Verriegelungsausnehmung, wobei dieses verstellbare Verriegelungsmittel nach Verstellung jeweils wieder in der neuen Einstellposition fixierbar ist. Die möglichen Einstellpositionen sind so gewählt, dass die beiden Verriegelungsmittel in jeder der Einstellpositionen miteinander in verriegelnden Eingriff kommen können, sofern der Schwenkhebel eine jeweilige passende Schwenkstellung eingenommen hat, so dass jede Einstellposition des Adapterelementes und damit des daran vorgesehenen Verriegelungsmittels mit einer zugeordneten Schwenkstellung des Schwenkhebels korrespondiert, in welcher der Schwenkhebel fixierbar ist.

Die erfindungsgemäße Lösung ermöglicht somit eine variable Festlegung der gewünschten bestimmten Schwenkstellung der Unterfahrschutzbarriere, also z.B. deren Freigabestellung, und somit eine ganz einfache Anpassung an unterschiedliche geometrische Vorgaben und heckseitige Freiräume verschiedener Lastentransportfahrzeuge, die mit der Unterfahrschutzeinrichtung ausgestattet werden sollen. Die erfindungsgemäße Unterfahrschutzeinrichtung kann mit einem sehr einfachen und preisgünstigen Aufbau realisiert werden und funktioniert sehr zuverlässig.

Vorzugsweise ist die Sperrriegelvorrichtung an dem Schwenkhebel vorgesehen, wohingegen die Verriegelungsausnehmung an dem Basishalteelement vorgesehen ist. Dies bedeutet somit, dass die Arretiereinrichtung eine an dem Schwenkhebel vorgesehene Sperrriegelvorrichtung mit einem quer zur Schwenkebene des Schwenkhebels relativ zu diesem bewegbaren und sich in der Schwenkebene zusammen mit dem Schwenkhebel bei dessen Schwenkbewegungen bewegenden Sperrriegel aufweist, wobei der Sperrriegel in einer der bestimmten Schwenkstellungen der Unterfahrschutzbarriere entsprechenden Schwenkstellung des Schwenkhebels relativ zu diesem in eine am Basishalteelement fixierte Verriegelungsausnehmung bewegbar ist, um den Schwenkhebel zu arretieren und die Unterfahrschutzbarriere in der bestimmten Schwenkstellung zu halten, wobei die Verriegelungsausnehmung an einem Adapterelement vorgesehen ist, welches in verschiedenen Einstellpositionen fixierbar an dem Basishalteelement angeordnet ist, und wobei die Verriegelungsausnehmung in jeder der Einstellpositionen so positioniert ist, dass sie den Sperrriegel in einer der jeweiligen Einstellpositionen des Adapterelementes entsprechenden Schwenkstellung des Schwenkhebels zu dessen Arretierung aufnehmen kann.

Aus Gründen der konstruktiven Vereinfachung ist es vorteilhaft, wenn die Sperrriegelvorrichtung an einer dem Basishalteelement abgewandten Seite des Schwenkhebels angeordnet ist, wobei der Sperrriegel ein Durchgangsloch in dem Schwenkhebel durchsetzt, um die Verriegelungsausnehmung des Adapterelementes verriegelnd in Eingriff zu nehmen.

Die gemäß der vorliegenden Erfindung variabel einstellbare bestimmte Schwenkstellung der Unterfahrschutzbarriere ist vorzugsweise deren Freigabestellung, wenngleich das Prinzip auch auf andere Schwenkstellungen der Unterfahrschutzbarriere anwendbar wäre. Eine variable Einstellbarkeit der Freigabestellung ist besonders vorteilhaft, da hierfür ein größerer Bedarf im Hinblick auf die Anpassbarkeit der Unterfahrschutzeinrichtung an unterschiedliche Platzverhältnisse im Heckbereich der Lastentransportfahrzeuge gegeben ist.

Vorzugsweise sollte die Einstellbarkeit der bestimmten Schwenkstellung der Unterfahrschutzbarriere stufenlos möglich sein. Eine solche Lösung bietet z.B. eine Ausführungsform der Erfindung, bei der das Basishalteelement und der Schwenkhebel aus Plattenteilen gebildet sind und das Adapterelement ein Blechformteil ist, welches an dem Basishalteelement mittels wenigstens einer Befestigungsschraube fixiert ist, wobei die Befestigungsschraube in miteinander fluchtenden Löchern in dem Adapterelement und in dem Basis - halteelement aufgenommen ist, wobei wenigstens eines der Löcher ein bogenförmiges Langloch ist. Das bogenförmige Langloch bietet stufenloses Einstellspiel für die Festlegung der bestimmten Schwenkstellung, in der die Unterfahrschutzbarriere mittels der Arretiereinrichtung festlegbar sein soll.

Bei der Verriegelungsausnehmung handelt es sich vorzugsweise um ein Loch, insbesondere Durchgangsloch in dem Adapterelement (oder ggf. in dem Schwenkhebel).

Bei dem Sperrriegel handelt es sich vorzugsweise um einen axial verschiebbar zwischen einer Verriegelungsstellung und einer Entriegelungsstellung geführten und mittels einer Vorspannfeder zur Verriegelungsstellung hin vorgespannten Verriegelungsbolzen, der mittels eines Betätigungshebels entgegen der Vorspannwirkung der Vorspannfeder in die Entriegelungsstellung bewegbar ist.

Ein Ausführungsbeispiel der Erfindung wird nachfolgend unter Bezugnahme auf die Figuren näher erläutert.
- Figur 1: zeigt in einer perspektivischen Teildarstellung eines Ausführungsbeispiels der Erfindung eine Halterungseinrichtung mit einer daran angeordneten Unterfahrschutzbarriere in deren Freigabestellung.
- Figur 2: zeigt eine Seitenansicht des Ausführungsbeispiels aus Figur 1 mit in Sicherungsstellung befindlicher Unterfahrschutzbarriere.
- Figur 3: zeigt in einer gegenüber Figur 2 vergrößerten Darstellung eine Schnittansicht gemäß der Schnittebene A-A in Figur 2.
- Figur 4: zeigt das Adapterelement der Unterfahrschutzeinrichtung in isolierter, perspektivischer Darstellung.
- Figur 5: zeigt das Adapterelement aus Figur 4 in isolierter perspektivischer Darstellung aus einem anderen Blickwinkel als Figur 4.
- Figur 6: zeigt in einer perspektivischen Detaildarstellung die Anordnung des Adapterelementes an dem Basishalteelement, wobei der Schwenkhebel aus Gründen der besseren Übersichtlichkeit in Figur 6 weggelassen wurde.
- Figur 7: zeigt in einer perspektivischen Teildarstellung die Anordnung des Adapterelementes an dem Basishalteelement aus einer anderen Perspektive als Figur 6, wobei der Schwenkhebel ebenfalls weggelassen wurde.

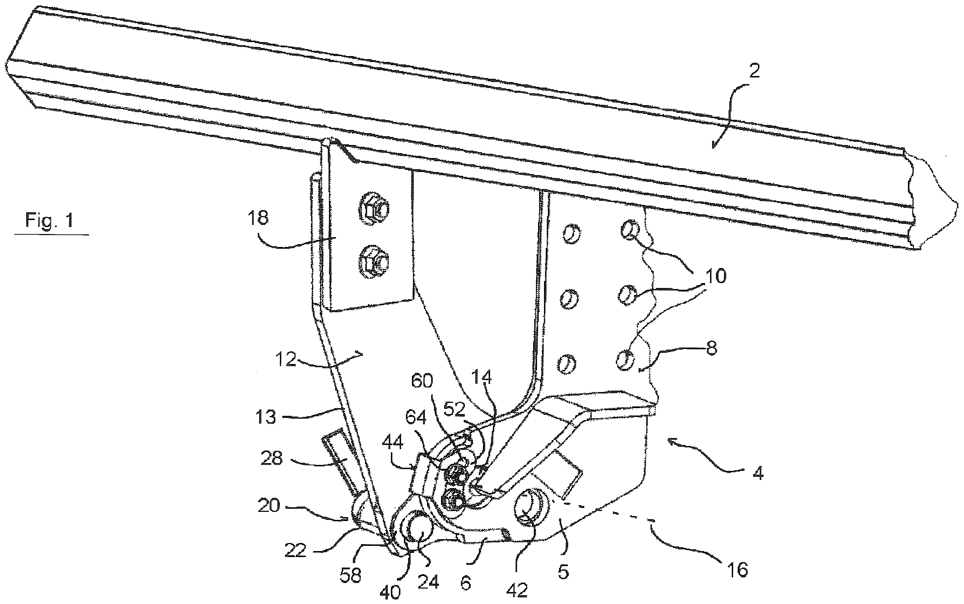

Figur 1 zeigt eine von zwei die Unterfahrschutzbarriere 2 tragenden Halterungseinrichtungen 4 einer Halterungsanordnung der Unterfahrschutzeinrichtung. Die im Wesentlichen gleich aufgebauten und ggf. spiegelsymmetrisch vorgesehenen Halterungseinrichtungen 4 weisen in Längsrichtung der Unterfahrschutzbarriere 2 einen Abstand auf und sind heckseitig an dem Rahmen des mit der Unterfahrschutzeinrichtung auszustattenden Lastentransportfahrzeugs zu befestigen, so dass sich die Unterfahrschutzbarriere 2 quer zur Geradeausfahrtrichtung des Lastentransportfahrzeugs und horizontal erstreckt. Die Halterungseinrichtung 4 weist ein aus zwei aneinandergefügten Plattenteilen 5, 6 gebildetes Basishalteelement 8 auf, welches ein Raster von Durchgangslöchern 10 für die Durchführung von Befestigungsschrauben zur Befestigung des Basishalteelementes am Fahrzeugrahmen oder an einem zwischengeschalteten, rahmenfesten Anbauteil hat.

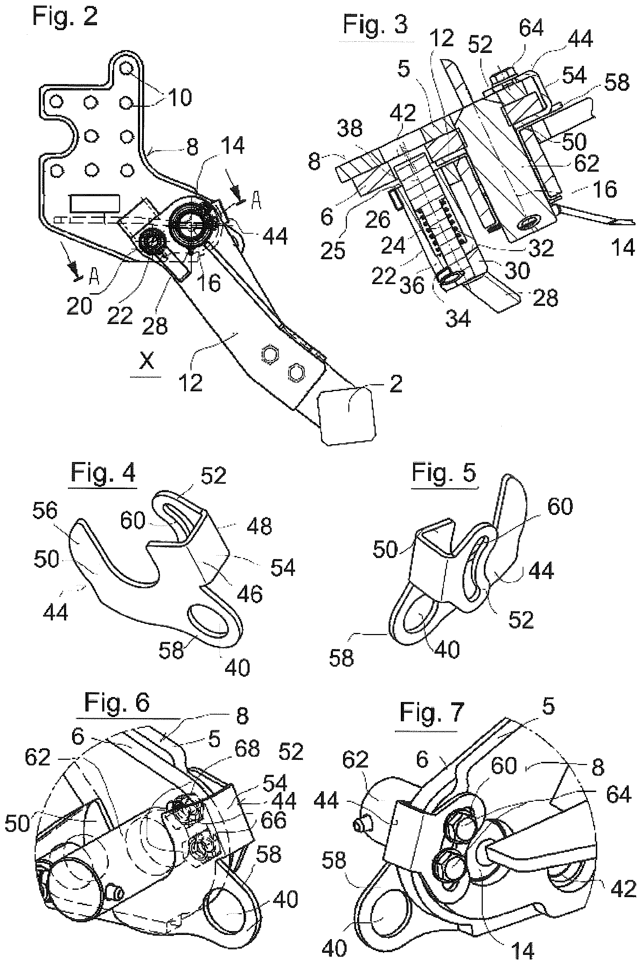

Ein Schwenkhebel 12 ist vermittels einer Schwenklageranordnung 14 mit dem Basishalteelement 8 schwenkbeweglich verbunden, so dass er zwisehen der in Figur 1 gezeigten Freigabestellung und der in Figur 2 gezeigten Sicherungsstellung um eine parallel zur Unterfahrschutzbarriere 2 verlaufende, von der Schwenklageranordnung 14 definierte Schwenkachse 16 verschwenkbar ist, so dass ein unterer heckseitiger Bereich X (vgl. Figur 2) in der Sicherungsstellung nach hinten durch die Unterfahrschutzeinrichtung gesichert - und in der Freigabestellung hinten freiliegt. Auch der Schwenkhebel 12 ist im Beispielsfall aus einem Plattenteil 13 gebildet. Die Plattenteile 5, 6 und 13 sind in parallel zueinander liegenden Ebenen angeordnet. Die Unterfahrschutzbarriere 2 ist mittels einer Befestigungsplatte 18 an dem von der Gelenkanordnung 14 entfernten Ende des Schwenkhebels 12 befestigt.

Die Halterungsanordnung hat an wenigstens einer der Halterungseinrichtungen 4 eine Arretiereinrichtung 20, mittels welcher die Unterfahrschutzbarriere 2 einerseits in der Freigabestellung gemäß Figur 1 - und andererseits in der Sicherungsstellung gemäß Figur 2 arretierbar ist.

Die Arretiereinrichtung 20 umfasst eine an dem Schwenkhebel 12 angeordnete Sperrriegelvorrichtung 22 mit einem parallel zur Schwenkachse 16 und somit quer zur Schwenkebene des Schwenkhebels 12 relativ zu dem Schwenkhebel 12 bewegbaren und sich in der Schwenkebene zusammen mit dem Schwenkhebel 12 bei dessen Schwenkbewegungen bewegenden Sperrriegel 24. Der Sperrriegel 24 ist ein an dem Schwenkhebel 12 axial verschiebbar zwischen einer Verriegelungsstellung und einer Entriegelungsstellung geführter und mittels einer Vorspannfeder 26 zu seiner Verriegelungsstellung hin vorgespannter Verriegelungsbolzen, der mittels eines Betätigungshebels 28 entgegen der Vorspannwirkung der Vorspannfeder 26 in die Entriegelungsstellung bewegbar ist. Der Verriegelungsbolzen 24 durchsetzt ein Loch 25 in dem Schwenkhebel 12.

Der Verriegelungsbolzen 24 weist an seinem hinteren Ende eine darauf fest aufsitzende, freiliegende Hülse 30 auf, von der der Betätigungshebel 28 radial und rückwärtig nach außen absteht. Die Hülse 30 stützt sich mit einer vorderen Schrägfläche 32 an einer komplementären Schrägfläche 34 am hinteren Ende des Führungsgehäuses 36 des Verriegelungsbolzens 24 ab. In der in Figur 3 gezeigten Verriegelungsstellung des Verriegelungsbolzens 24 sind die Schrägflächen 32, 34 parallel zueinander ausgerichtet und liegen im Wesentlichen ganzflächig aneinander an. Durch Drehen des Betätigungshebels 28 und damit auch der Hülse 30 um die Längsachse 38 des Verriegelungsbolzens 24 werden auch die Schrägflächen 30, 32 gegeneinander verdreht, so dass ihre Parallelität aufgehoben wird. Dabei kommt es zu einer axialen Rückzugsbewegung des Verriegelungsbolzens 24 in Richtung zur Entriegelungsstellung.

Die Halteeinrichtung 4 weist zwei in Bezug auf das Basishalteelement 8 feststehende Rastlöcher 40 und 42 (vgl. insbesondere Figur 1) als Verriegelungsausnehmungen auf, die so positioniert sind, dass sie den Verriegelungsbolzen 24 in einer jeweiligen bestimmten Schwenkstellung des Schwenkhebels 12 einrastend aufnehmen können. In der in Figur 1 gezeigten Freigabestellung der Unterfahrschutzbarriere 2 nimmt das Loch 40 den Verriegelungsbolzen 24 verriegelnd in Eingriff, wobei der Verriegelungsbolzen 24 in seiner axial vorgeschobenen Verriegelungsstellung ist. In der in Figur 2 und Figur 3 gezeigten Sicherungsstellung der Unterfahrschutzbarriere 2 ist der Verriegelungsbolzen 24 in dem Verriegelungsloch 42 verriegelnd in Eingriff genommen, um den Schwenkhebel 12 und damit die Unterfahrschutzbarriere 2 in der Sicherungsstellung zu arretieren. Das Verriegelungsloch 42 ist im vorliegenden Beispielsfall unmittelbar in dem Basishalteelement 8 vorgesehen, wohingegen das Verriegelungsloch 40 in einem Adapterelement 44 ausgebildet ist.

Zum Entriegeln des Schwenkhebels 12 und der damit verbundenen Unterfahrschutzbarriere 2 wird der Betätigungshebel 28 um die Längsachse 38 des Verriegelungsbolzens 24 verdreht, so dass der Verriegelungsbolzen 24 axial zurück- und aus dem jeweiligen Verriegelungsloch 40 oder 42 herausgezogen wird. Die Unterfahrschutzbarriere 2 kann dann in eine andere Schwenkstellung verschwenkt werden.

Das Adapterelement 44 ermöglicht eine stufenlose Verstellung der Position des Verriegelungsloches 40 für die Festlegung der Unterfahrschutzbarriere 2 in ihrer Freigabestellung. Wie schon erwähnt, erlaubt dies eine einfache und rasche Anpassung der Unterfahrschutzeinrichtung an geometrische Vorgaben und räumliche Beschränkungen des mit der Unterfahrschutzeinrichtung auszurüstenden Lastentransportfahrzeugs.

Bei dem in Figur 4 und Figur 5 gut erkennbaren Adapterelement 44 handelt es sich um ein Blechformteil. Dieses wurde dadurch gebildet, dass mittels Laserschneiden oder dgl. ein entsprechend konturiertes flaches Blechstück aus einem Ausgangsblech ausgeschnitten worden ist und dieses Blechstück dann längs der Kantenlinien 46, 48 zweifach abgekantet wurde, so dass zwei parallel zueinander verlaufende Wandabschnitte 50, 52 entstanden sind, die U-schenkelartig von einem gemeinsamen Verbindungsstegabschnitt 54 abstehen. Der Wandabschnitt 50 weist einen hakenförmigen Bereich 56 und einen davon entfernt nach außen abstehenden Ösenbereich 58 auf, wobei in dem Ösenbereich 58 das Verriegelungsloch 40 ausgebildet ist. Der andere Wandabschnitt 52 ist im Beispielsfall nierenförmig und weist ein bogenförmiges Langloch 60 auf.

In Figur 6 und Figur 7 ist die bestimmungsgemäße Anordnung des Adapterelementes 44 an dem Basishalteelement 8 gut erkennbar, wobei der Schwenkhebel 12 der Übersichtlichkeit halber nicht eingezeichnet ist. Das Adapterelement 44 übergreift mit seinem Verbindungsstegabschnitt 54 die Plattenteile 5, 6 des Basishalteelementes 8, so dass der nierenförmige Wan - dabschnitt 52 mit seinem bogenförmigen Langloch 60 außen an dem Plattenteil 5 parallel dazu anliegt, während sich der andere Wandabschnitt 50 des Adapterelementes 54 mit seinem hakenförmigen Bereich an dem Plattenteil 6 des Basishalteelementes 8 erstreckt und dabei einen Lagerzapfen 62 der Schwenklageranordnung 14 untergreift. Der Ösenbereich 58 des Wandabschnittes 50 steht schräg nach unten über die Randkontur des Basishalteelementes 8 hinweg ab, so dass das Verriegelungsloch 40 freiliegt, so dass es den Verriegelungsbolzen 24 in der in Figur 1 gezeigten Freigabestellung der Unterfahrschutzbarriere 2 sicher in seiner Verriegelungsstellung aufnehmen kann.

Das Adapterelement 44 ist an dem Basishalteelement 8 angeschraubt und zwar im Beispielsfall mittels zweier Schrauben 64. Selbstverständlich könnte auch eine andere Anzahl an Schrauben 64 in Frage kommen. Die Schrauben 64 durchsetzen das bogenförmige Langloch 60 des Adapterelementes sowie ein jeweiliges Durchgangsloch in dem Basishalteelement 8. In Schraubmutterausnehmungen 66 des Plattenteils 6 sind Schraubmuttern 68 aufgenommen, die mit den Schrauben 64 verschraubt sind. Im Beispielsfall sind die Schraubmuttern 68 außen von dem Wandabschnitt 50 des Adapterelementes 44 überdeckt.

Aufgrund der gewählten Geometrie des Adapterelementes 44 in Anpassung an das Basishalteelement 8 und den Schwenkhebel 12 erlaubt die Anordnung ein variables Verstellen der Position des Verriegelungsloches 40 über einen Winkelbereich, der durch das Spiel des bogenförmigen Langlochs 60 relativ zu den Schrauben 64 in deren gelöstem Zustand definiert ist. In jeder der möglichen Einstellpositionen des Adapterelementes 44 liegt das Langloch in Draufsichtsposition zu einer Kreisbahn, entlang welcher sich der Verriegelungsbolzen 24 bei den Schwenkbewegungen des Schwenkhebels 12 um die Schwenkachse 16 bewegt. Dadurch ist sichergestellt, dass in jeder der möglichen Einstellpositionen des Adapterelementes 44 an dem Basishalteelement 80 der Verriegelungbolzen 24 das Verriegelungsloch 40 bei entsprechender Schwenkstellung des Schwenkhebels 12 treffen kann.

Das Verstellen des Adapterelementes 44 in eine andere Einstellposition erfolgt dadurch, dass die Befestigungsschrauben 64 gelöst werden, bis das Adapterelement 44 entsprechend der Führung zwischen dem bogenförmigen Langloch 60 und den Schrauben 64 entlang der Bogenlinie des Langlochs 60 bewegbar ist. Ist die neue gewünschte Einstellposition gefunden, so werden die Befestigungsschrauben 64 wieder angezogen, um das Adapterelement 44 in der neuen Einstellposition zu fixieren. Die verschiedenen Einstellpositionen des Adapterelementes 44 korrespondieren mit entsprechend zugeordneten Einstellungen der Freigabestellung der Unterfahrschutzbarriere 2, da diese Freigabestellung durch die Schwenkstellung des Schwenkhebels 2 bestimmt ist, in welcher der Verriegelungsbolzen 24 mit dem Verriegelungsloch 40 verriegelnd in Eingriff treten kann.

Beim Einschwenken des Schwenkhebels 12 in diese Schwenkstellung kann der Verriegelungsbolzen 24 aufgrund seiner Federvorspannung selbsttätig in das Verriegelungsloch einrücken, wenn er dazu freigegeben ist, d.h. nicht durch entsprechende Betätigung des Betätigungshebels 28 zwangsweise zurückgehalten wird.

## Patentansprüche

1. Unterfahrschutzeinrichtung für ein Lastentransportfahrzeug mit einem Fahrzeugrahmen,
umfassend eine längliche, horizontal angeordnete Unterfahrschutzbarriere (2) zur Sicherung eines heckseitigen Bereichs des Lastentransportfahrzeugs gegen das Auffahren bzw. Unterfahren durch ein anderes Fahrzeug und eine Halterungsanordnung mit wenigstens einer Halterungseinrichtung (4) zur Befestigung der Unterfahrschutzbarriere (2) am heckseitigen Ende des Fahrzeugrahmens des Lastentransportfahrzeugs, wobei die Unterfahrschutzbarriere (2) zwischen einer den zu sichernden Bereich sperrenden Sicherungsstellung und einer den Bereich freigebenden Freigabestellung um eine normalerweise horizontale Schwenkachse (16) relativ zum Fahrzeugrahmen verschwenkbar ist und wobei die Halterungsanordnung ferner eine Arretiereinrichtung (20) aufweist, mittels welcher die Unterfahrschutzbarriere (2) in wenigstens einer bestimmten Schwenkstellung arretierbar ist, wobei die Halterungseinrichtung (4) ein an dem Fahrzeugrahmen zu befestigendes Basishalteelement (8) und einen an dem Basishalteelement (8) mittels einer von dem Basishalteelement (8) getragenen Schwenklageranordnung (14) angeordneten, um die Schwenkachse (16) schwenkbaren Schwenkhebel (12) aufweist, an dem die Unterfahrschutzbarriere (2) angeordnet ist, wobei die Arretiereinrichtung (20) als Verriegelungsmittel eine Sperrriegelvorrichtung (22) mit einem quer zur Schwenkebene des Schwenkhebels (12) relativ zu diesem bewegbaren Sperrriegel (24) und eine Verriegelungsausnehmung (40) zur Aufnahme des Sperrriegels (24) in einer der bestimmten Schwenkstellung der Unterfahrschutzbarriere (2) entsprechenden Schwenkstellung des Schwenkhebels (12) aufweist, um den Schwenkhebel (12) zu arretieren und die Unterfahrschutzbarriere (2) in der bestimmten Schwenkstellung zu halten, wobei von den Verriegelungsmitteln Sperrriegel (24) und Verriegelungsausnehmung (40) eines an dem Schwenkhebel (12) - und das andere an einem Adapterelement (44) vorgesehen ist,
**dadurch gekennzeichnet, dass** das Adapterelement (44) in verschiedenen Einstellpositionen fixierbar an dem Basishalteelement (8) angeordnet ist, wobei das an dem Basishalteelement (8) vorgesehene Verriegelungsmittel (24, 40) in jeder der Einstellpositionen des Adapterelementes (44) so positioniert ist, dass es in einer der jeweiligen Einstellposition entsprechenden Schwenkstellung des Schwenkhebels (12) mit dem anderen Verriegelungsmittel (24, 40) verriegelnd in Eingriff bringbar ist, um den Schwenkhebel (12) zu arretieren.

2. Unterfahrschutzeinrichtung nach Anspruch 1, wobei die Sperrriegelvorrichtung (22) an dem Schwenkhebel (12) vorgesehen ist, wohingegen die Verriegelungsausnehmung (40) an dem Basishalteelement (8) vorgesehen ist.

3. Unterfahrschutzeinrichtung nach Anspruch 2, wobei die Sperrriegelvorrichtung (22) an einer dem Basishalteelement (8) abgewandten Seite des Schwenkhebels (12) angeordnet ist, wobei der Sperrriegel (24) ein Durchgangsloch (25) in dem Schwenkhebel (12) durchsetzt, um die Verriegelungsausnehmung (40) des Adapterelementes (44) verriegelnd in Eingriff zu nehmen.

4. Unterfahrschutzeinrichtung nach einem der vorhergehenden Ansprüche, wobei die bestimmte Schwenkstellung der Unterfahrschutzbarriere (2) die Freigabestellung der Unterfahrschutzbarriere (2) ist.

5. Unterfahrschutzeinrichtung nach einem der vorhergehenden Ansprüche, wobei das Adapterelement (44) stufenlos in die verschiedenen Einstellpositionen verstellbar an dem Basiselement (8) angeordnet ist.

6. Unterfahrschutzeinrichtung nach einem der vorhergehenden Ansprüche, wobei das Basishalteelement (8) und der Schwenkhebel (12) aus Plattenteilen (5,6; 13) gebildet sind und das Adapterelement (44) ein Blechformteil ist, welches an dem Basishalteelement (8) mittels wenigstens einer Befestigungsschraube (64) fixiert ist, wobei die Befestigungsschraube (64) in miteinander fluchtenden Löchern in dem Adapterelement (44) und in dem Basishalteelement (8) aufgenommen ist, wobei wenigstens eines der Löcher ein bogenförmiges Langloch (60) ist.

7. Unterfahrschutzeinrichtung nach einem der vorhergehenden Ansprüche, wobei die Verriegelungsausnehmung (40) ein Loch ist.

8. Unterfahrschutzeinrichtung nach einem der vorhergehenden Ansprüche, wobei der Sperrriegel (24) ein axial verschiebbar zwischen einer Verriegelungsstellung und einer Entriegelungsstellung geführter und mittels einer Vorspannfeder (26) zur Verriegelungsstellung hin vorgespannter Verriegelungsbolzen ist, der mittels eines Betätigungshebels (28) entgegen der Vorspannwirkung der Vorspannfeder (26) in die Entriegelungsstellung bewegbar ist.

## Claims

1. Underride protection apparatus for a load transport vehicle comprising a vehicle frame that has an elongate, horizontal underride protective barrier (2) for protecting against another vehicle driving into and under a rear region of the load transport vehicle, and a mounting arrangement comprising at least one mounting apparatus (4) for fastening the underride protective barrier (2) at the rear end of the vehicle frame of the load transport vehicle, the underride protective barrier (2) being pivotable relative to the vehicle frame, about a normally horizontal pivot axis (16), between a safety position which blocks the region to be protected, and a release position which releases the region, and the mounting apparatus also having a locking means (20), by means of which the underride protective barrier (2) can be locked in at least one specific pivot position, the mounting apparatus (4) having a base holding element (8) to be fastened to the vehicle frame and a pivot lever (12) which is arranged on the base holding element (8) by means of a pivot bearing arrangement (14) supported by the base holding element (8) and is pivotable about the pivot axis (16), and on which pivot lever the underride protective barrier (2) is arranged, the locking apparatus (20) having, as a locking means, a locking bar device (22) comprising a locking bar (24) which can be moved relative to the pivot lever, perpendicularly to the pivot plane of said pivot lever (12), and a locking recess (40) for receiving the locking bar (24) in a pivot position of the pivot lever (12) which corresponds to the specific pivot position of the underride protective barrier (2) in order to lock the pivot lever (12) and to hold the underride protective barrier (2) in the specific pivot position, one of the locking means (locking bar (24) and locking recess (40) being provided on the pivot lever (12) and the other on an adapter element (44), **characterised in that** the adapter element (44) is arranged on the base holding element (8) such that it can be fixed in various adjustment positions, the locking means (24, 40) provided on the base holding element (8) being positioned, in each of the adjustment positions of the adapter element (40), such that, in a pivot position of the pivot lever (12) which corresponds to the relevant adjustment position, said locking means can be engaged in a locking manner with the other locking means (24, 40), in order to lock the pivot lever (12).

2. Underride protection apparatus according to claim 1, wherein the locking bar device (22) is provided on the pivot lever (12), whereas the locking recess (40) is provided on the base holding element (8).

3. Underride protection apparatus according to claim 2, wherein the locking bar device (22) is arranged on a side of the pivot lever (12) remote from the base holding element (8), wherein the locking bar (24) passes through a through-hole (25) in the pivot lever (12) in order to engage the locking recess (40) of the adapter element (44) in a locking manner.

4. Underride protection apparatus according to any of the preceding claims, wherein the specific pivot position of the underride protective barrier (2) is the release position of the underride protective barrier (2).

5. Underride protection apparatus according to any of the preceding claims, wherein the adapter element (44) is arranged on the base element (8) such that said adapter element can be continuously adjusted into the various adjustment positions.

6. Underride protection apparatus according to any of the preceding claims, wherein the base holding element (8) and the pivot lever (12) are formed of plate parts (5, 6; 13) and the adapter element (44) is a sheet-metal shaped part which is fixed to the base holding element (8) by means of at least one fastening screw (64), wherein the fastening screw (64) is received in mutually aligned holes in the adapter element (44) and in the base holding element (8), wherein at least one of the holes is a curved slot (60).

7. Underride protection apparatus according to any of the preceding claims, wherein the locking recess (40) is a hole.

8. Underride protection apparatus according to any of the preceding claims, wherein the locking bar (24) is a locking bolt which is guided in an axially slidable manner between a locking position and an unlocking position and is preloaded towards the locking position by means of a pre-tensioned spring (26), and which locking bolt can be moved counter to the preload effect of the pre-tensioned spring (26) and into the unlocking position by means of an operating lever (28).

## Revendications

1. Dispositif de protection arrière pour un véhicule de transport de charge avec un bâti de véhicule,
comprenant une barrière de protection arrière (2) agencée horizontalement, oblongue pour la protection d'une zone côté arrière du véhicule de transport de charge contre l'emboutissage ou l'enfoncement par un autre véhicule et un agencement de support avec au moins un dispositif de support (4) pour la fixation de la barrière de protection arrière (2) sur l'extrémité côté arrière du bâti de véhicule du véhicule de transport de charge, dans lequel la barrière de protection arrière (2) peut être pivotée entre une position de protection bloquant la zone à protéger et une position de libération libérant la zone autour d'un axe de pivotement (16) normalement horizontal par rapport au bâti de véhicule et dans lequel l'agencement de support présente de plus un dispositif d'arrêt (20) au moyen duquel la barrière de protection arrière (2) peut être arrêtée dans au moins une position de pivotement déterminée, dans lequel le dispositif de support (4) présente un élément de retenue de base (8) à fixer sur le bâti de véhicule et un levier de pivotement (12) pivotant autour de l'axe de pivotement (16), agencé sur l'élément de retenue de base (8) au moyen d'un agencement de palier pivotant (14) porté par l'élément de retenue de base (8), sur lequel la barrière de protection arrière (2) est agencée, dans lequel le dispositif d'arrêt (20) présente comme moyen de verrouillage un dispositif de verrou de blocage (22) avec un verrou de blocage (24) mobile transversalement au plan de pivotement du levier de pivotement (12) par rapport à celui-ci et un évidement de verrouillage (40) pour la réception du verrou de blocage (24) dans une position de pivotement correspondant à la position de pivotement déterminée de la barrière de protection arrière (2) du levier de pivotement (12) afin d'arrêter le levier de pivotement (12) et de maintenir la barrière de protection arrière (2) dans la position de pivotement déterminée, dans lequel parmi les moyens de verrouillage verrou de blocage (24) et évidement de verrouillage (40) l'un est prévu sur le levier de pivotement (12) - et l'autre sur un élément d'adaptateur (44),
**caractérisé en ce que** l'élément d'adaptateur (44) est agencé de manière fixable dans différentes positions de réglage sur l'élément de retenue de base (8), dans lequel le moyen de verrouillage (24, 40) prévu sur l'élément de retenue de base (8) est positionné dans chacune des positions de réglage de l'élément d'adaptateur (44) de sorte qu'il puisse être amené en prise par verrouillage dans une position de pivotement correspondant à la position de réglage respective du levier de pivotement (12) avec l'autre moyen de verrouillage (24, 40) afin d'arrêter le levier de pivotement (12).

2. Dispositif de protection arrière selon la revendication 1, dans lequel le dispositif de verrou de blocage (22) est prévu sur le levier de pivotement (12), alors que l'évidement de verrouillage (40) est prévu sur l'élément de retenue de base (8).

3. Dispositif de protection arrière selon la revendication 2, dans lequel le dispositif de verrou de blocage (22) est agencé sur un côté éloigné de l'élément de retenue de base (8) du levier de pivotement (12), dans lequel le verrou de blocage (24) traverse un trou débouchant (25) dans le levier de pivotement (12) afin de mettre en prise l'évidement de verrouillage (40) de l'élément d'adaptateur (44) par verrouillage.

4. Dispositif de protection arrière selon l'une quelconque des revendications précédentes, dans lequel la position de pivotement déterminée de la barrière de protection arrière (2) est la position de libération de la barrière de protection arrière (2).

5. Dispositif de protection arrière selon l'une quelconque des revendications précédentes, dans lequel l'élément d'adaptateur (44) est agencé en continu dans les différentes positions de réglage de manière réglable sur l'élément de base (8).

6. Dispositif de protection arrière selon l'une quelconque des revendications précédentes, dans lequel l'élément de retenue de base (8) et le levier de pivotement (12) sont formés en parties de plaque (5, 6 ; 13) et l'élément d'adaptateur (44) est une pièce moulée en tôle qui est fixée sur l'élément de retenue de base (8) au moyen d'au moins une vis de fixation (64), dans lequel la vis de fixation (64) est reçue dans des trous s'alignant les uns sur les autres dans l'élément d'adaptateur (44) et dans l'élément de retenue de base (8), dans lequel au moins un des trous est un trou oblong arqué (60).

7. Dispositif de protection arrière selon l'une quelconque des revendications précédentes, dans lequel l'évidement de verrouillage (40) est un trou.

8. Dispositif de protection arrière selon l'une quelconque des revendications précédentes, dans lequel le verrou de blocage (24) est un boulon de verrouillage précontraint au moyen d'un ressort de précontrainte (26) vers la position de verrouillage et guidé de manière mobile axialement entre une position de verrouillage et une position de déverrouillage qui est mobile au moyen d'un levier d'actionnement (28) dans le sens inverse à l'action de précontrainte du ressort de précontrainte (26) dans la position de déverrouillage.
